# EUROPÄISCHE PATENTSCHRIFT

(11) **EP 1 626 936 B1**
(45) Veröffentlichungstag und Bekanntmachung des Hinweises auf die Patenterteilung: **14.03.2007**
(21) Anmeldenummer: 04733821.5
(22) Anmeldetag: 19.05.2004
(51) Int. Cl.: C02F 1/42

(54) **VORRICHTUNG FÜR DIE WASSERENTHÄRTUNG**
DEVICE FOR SOFTENING WATER
DISPOSITIF POUR ADOUCIR L'EAU

(30) Priorität: 19.05.2003 DE 10322753; 04.01.2004 DE 102004001085
(43) Veröffentlichungstag der Anmeldung: 22.02.2006
(73) Patentinhaber: Biechele, Günter, 88299 Leutkirch (DE)
(72) Erfinder: BIECHELE, Günter, 88299 Leutkirch (DE); FRANKE, Horst, 87534 Oberstaufen (DE)
(74) Vertreter: Pfister, Stefan Helmut Ulrich
(86) Internationale Anmeldenummer: PCT/EP2004/005426
(87) Internationale Veröffentlichungsnummer: WO 2004/101443

(56) Entgegenhaltungen:
- EP-A- 0 240 725
- EP-A- 1 048 776
- DE-A- 3 831 811

## Beschreibung

Die Erfindung betrifft eine Vorrichtung für die Wasserenthärtung.

Vorrichtungen für die Wasserenthärtung sind im Stand der Technik hinlänglich bekannt. Sie werden zum Beispiel in Haushaltsgeräten, zum Beispiel Geschirrspülautomaten aber auch in Waschautomaten eingesetzt. Die vorbekannten Vorrichtungen haben die Aufgabe die Wasserhärte, die insbesondere von Kalk herrührt, entsprechend zu senken.

Hierzu wird das Wasser durch ein Tauscherharz geleitet, in welchem sich Kalzium beziehungsweise Magnesium anlagert. Die Kalkkonzentration wird dadurch reduziert, der Härtegrad sinkt. Bei den Tauscherharzen handelt es sich dabei um komplexe Polymere mit entsprechenden Eigenschaften. Durch das andauernde Herausfiltern der nicht erwünschten Ionen wird das Tauscherharz entsprechend geladen, das bedeutet, mit Ionen angereichert. Der Wirkungsgrad des Tauscherharzes nimmt dabei daher ab, da die Kapazität zur Aufnahme von Ionen endlich ist.

Es ist daher bekannt, einen Regenerationsschritt durchzuführen. Bei dem Regenerationsschritt wird eine Salzlösung, zum Beispiel eine Natrium-Chlorid-Sole eingesetzt. Das Tauscherharz wird eine gewisse Zeit mit der Sole behandelt, wodurch die Kalziumbeziehungsweise Magnesiumionen gegen Natriumionen getauscht werden.

Hernach erfolgt ein Spülgang, um insbesondere das Chlor aus dem Tauscherharz zu entfernen.

Im Stand der Technik ist es bekannt, vorgenannte Vorrichtungen empirisch zu betreiben. Die Regenerationszeitpunkte des Tauscherharzes werden vorab durch Messungen ermittelt und werden dem Gerät vorgegeben. Bei einer entsprechenden Menge verbrauchten Wassers oder Anzahl von Waschprozessen und so weiter wird automatisch ein Regenerationsprozeß von der Steuerung verlangt. Auf den tatsächlichen Zustand des Tauscherharzes wird dabei nicht geachtet.

Dies führ dazu, daß regelmäßig zu früh der Regenerationsprozeß eingeleitet wird, wodurch Salz und Spülwasser unnötigerweise verbraucht wird.

Es wird daher verstärkt nach Systemen gefragt, die eine entsprechende Sensorik aufweisen, welche des Beladungszustand des Harzes und somit den optimalen Regenerationszeitpunkt erfassen.

Hierzu sind Systeme mit Leitwertsensoren bekannt, die im direkten Kontakt mit dem Tauscherharz sind und über elektrochemische Vergleichsberechnungen den Beladungszustand des Tauscherharzes ermitteln und so den optimalen Regenerationszeitpunkt festlegen.

Es sind aber auch Systeme bekannt, bei welchen der physikalische Effekt des Tauscherharzes ausgenutzt wird. Es handelt sich hierbei um eine Volumenänderung des Tauscherharzes in Abhängigkeit des Beladungszustandes.

Die elektronischen Sensorsysteme haben den Nachteil, daß die Sensoren im direkten Kontakt mit dem Tauscherharz sind und somit Dichtbereiche in der Vorrichtung integriert werden müssen, was entsprechend aufwendig ist. Auch ist die Elektronik entsprechend kompliziert und daher ebenfalls aufwendig. Die bekannten mechanischen Systeme arbeiten ungenau und erzeugen nur ein digitales Signal.

Ausgehend von diesem Stand der Technik ist es Aufgabe der Erfindung eine Vorrichtung zur Wasserenthärtung zur Verfügung zu stellen die einerseits kostengünstig herstellbar ist und andererseits möglichst kontinuierlich Informationen über den Beladungszustand des Tauscherharzes zur Verfügung stellt.

Gelöst wird diese Aufgabe durch eine Vorrichtung für die Wasserenthärtung, die mindestens einen mit einem Tauscherharz gefüllten Behälter aufweist, wobei zumindest ein Behälterbereich derart unter Vorspannung gesetzt ist, daß auch bei veränderter Volumenausdehnung des Tauscherharzes im Behälter alle Behälterinnenwände an dem Tauscherharz anliegen und die aufgrund der veränderten Volumenausdehnung resultierende veränderte Stellung des vorgespannten Behälterbereiches durch einen Sensor oder eine Anzeigeneinheit erfaßt wird.

Der erfindungsgemäße Vorschlag erreicht, daß unabhängig von dem tatsächlichen Beladungszustand durch den vorgespannten Behälterbereich immer eine gewisse Kraft auf das kristalline beziehungsweise pulverartige Tauscherharz besteht. Dadurch wird erreicht, daß die Packungsdichte möglichst optimal ist und sich keine die Messung verfälschenden, bevorzugten Strömungskanäle für die den Behälter durchfließenden Flüssigkeit bilden. Es ist nämlich dabei zu beachten, daß diese bevorzugten Fließkanäle für die Flüssigkeit dazu führen, daß die Effizienz der Wasserenthärtung durch das Tauscherharz sinkt. Da aber die erfindungsgemäße Anordnung eine Ausbildung solcher Kanäle nicht begünstigt, ist dies ein positiver Nebeneffekt der Erfindung.

Der vorgespannte Behälterbereich drückt daher permanent auf das Tauscherharz und die Stellungsänderung dieses Behälterbereiches dient als Maß für die Volumenänderung des Tauscherharzes im Behälter. Der Beladungszustand des Tauscherharzes wird durch eine unterschiedliche Stellung des vorgespannten Behälterbereiches erfaßbar gemacht. Durch die Vorspannung wird ein definierbarer Druck beziehungsweise eine definierbare Kraft auf das Tauscherharz ausgeübt und so sichergestellt, daß das Tauscherharz an den Innenwänden des Behälters entsprechend anliegt und den Raum optimal ausnützt. Dies wird aufgrund der Vorspannung bei jedem Beladungszustand des Tauscherharzes sichergestellt, wodurch eine zuverlässig funktionierende Vorrichtung zur Verfügung gestellt wird, da die Stellung des vorgespannten Behälterbereiches auf manigfache Möglichkeiten erfaßbar und auswertbar ist. Auf die aufwendige Anordnung von Meßanordnungen zur Bestimmung der elektrischen Leitfähigkeit des Harzes und so weiter kommt es nicht an, die Probleme in diesem Bereich bestehen ebenfalls nicht.

Die Erfindung sieht auch vor, daß eine dauerhafte Vorspannung auf das Harz eingeprägt wird. Auf den jeweiligen Beladungszustand kommt es nicht an, die Anordnung ist insbesondere auch erschütterungsfest, da die Vorspannung die Tauschharzperlen in entsprechender Position hält, auch wenn die Vorrichtung transportiert wird. Die Vorspannung erreicht immer eine möglichst optimale, platzsparende Anordnung der Tauscherharzperlen, ohne daß die Effizienz im Tauscherharz durch die Ausbildung von Leitungskanälen sinkt.

Günstigerweise wird die Vorspannung so gewählt, daß diese dem Volumenschwund vollständig zu folgen vermag, der im maximalen Belastungszustand zu erreichen ist. Dadurch wird sichergestellt, daß jeder Beladungszustand zwischen Be- und Entladung des Tauscherharzes, die durch die jeweils unterschiedlichen Voluminas und dadurch resultierenden unterschiedlichen Stellungen des vorgespannten Behälterbereiches auswertbar ist.

Die Anordnung ist dabei so gewählt, daß das Tauscherharz an den Behälterinnenwänden anliegt, wobei zu dem Behälterinnenraum der Bereich zählt, der von den Behälterbereichen, insbesondere auch von dem beweglichen, vorgespannten Behälterbereich abgegrenzt ist.

Gemäß der Erfindung wird vorgeschlagen, daß die veränderte Stellung des vorgespannten Behälterbereiches entweder durch einen Sensor oder eine Anzeigeneinheit erfaßt wird. In einer sehr günstigen Anordnung, die ohne sonstige elektrische oder elektronische Mittel auskommt, wird die Stellung des vorgespannten Behälterbereiches mit einer Anzeigeneinheit visualisiert. Zum Beispiel ist an dem vorgespannten Behälterbereich ein entsprechender Stößel vorgesehen, dessen Endbereich auch in einer Skalierung angezeigt wird. So ist es möglich, mit einfachen Mitteln eine kontinuierlichen Anzeige für den Beladungszustand des Tauscherharzes der erfindungsgemäßen Vorrichtung zu realisieren.

Alternativ wird vorgeschlagen einen Sensor einzusetzen. Auch hierzu gibt es eine Vielzahl von Varianten, wie die Stellung des vorgespannten Behälterbereiches durch den Sensor erfaßt wird. Die Auswertung mit einem Sensor erlaubt es, diese Stellungsinformation in einer nachgeschalteten Elektronik- beziehungsweise Auswerteinheit weiter zu nutzen, und daher in Abhängigkeit der Stellung den Beladungszustand des Harzes zu ermitteln und dann entsprechende Prozesse einzuleiten.

In einer bevorzugten Ausgestaltung der Erfindung ist vorgesehen, daß die Vorspannung auf das gesamte, in dem Behälter befindliche Tauscherharz wirkt.

Die aufgrund der unterschiedlichen Beladung resultierende Volumenänderung ist verhältnismäßig gering. Um hier ein gutes, zu detektierendes Maß zu erhalten ist es von Vorteil, daß möglichst das gesamte Tauscherharzvolumen als Meßgröße zur Verfügung steht und die Vorspannung auf das gesamte, im Behälter befindliche Tauscherharz wirkt. Verändert sich dann das Volumen des gesamten Tauscherharzes, aufgrund des geänderten Beladungszustandes, resultiert ein entsprechend größeres Maß, das zu detektieren ist.

Üblicherweise werden Tauscherharze eingesetzt, die einen bezüglich der Konzentration von Magnesium- beziehungsweise Kalziumionen negativen Volumenausdehnungskoeffizienten aufweisen. Das bedeutet, daß das Volumen sinkt, je mehr Magnesiumbeziehungsweise Kalziumionen in das Tauscherharz eingebettet sind. Üblicherweise werden als Tauscherharze Polymere verwendet, die an den jeweiligen Polymerenden Radikale aufweisen, die die störenden Ionen aus dem Wasser binden und festhalten. Die Erfindung erstreckt sich aber gleichwohl auch auf Anordnungen, die einen positiven Volumenausdehnungskoeffizienten bezüglich der Ionenkonzentration aufweisen. Die Erfindung funktioniert daher in gleicher Weise. Insgesamt ist es günstig, wenn ein Tauscherharz gewählt wird, welches einen möglichst großen Ausdehungskoeffizienten aufweist, damit in einfacher Weise ein gut detektierbares Signal entsteht.

In einer bevorzugten Variante der Erfindung ist vorgesehen, daß stark saure Kationentauscher oder schwach saure Kationentauscher als Tauscherharz Verwendung finden. Schwach saure Kationentauscher werden dabei zum Beispiel bevorzugt bei Filter für Lebensmittelanwendungen, wie Wasseraufbereitungsfilter oder Filter für Kaffeemaschinen und dergleichen, eingesetzt. In der Regel handelt es sich hierbei um Einwegfilterpatronen, da diese nicht mit Natriumchlorid regeneriert werden können, sondern nur mit Schwefelsäure. Aber auch diese schwach sauren Kationentauscher besitzen einen Ausdehnungskoeffizienten, wobei Untersuchungen ergeben haben, daß sich hierbei auch eine Volumenkontraktion einstellt.

Bei den Filtern für den Einsatz in Kaffeeautomaten werden aufgrund der entkeimenden Wirkung der versilberten Aktivkohle-Mischungen auch Mischungen von schwach-sauren Tauscherharzen und versilberter Aktivkohle verwendet. Auch solche Mischungen können bei der vorgespannten Variante eingesetzt werden. Ein Vorteil hierbei ist sogar, daß sich die beiden Komponenten bei der Durchströmung nicht entmischen, was bei nicht vorgespannten Komponenten der Fall ist. Dadurch wird die entkeimende Wirkung unterstützt und verbessert.

Gerade der Einsatz solcher schwach sauren Kationentauscher in den erfindungsgemäßen Vorrichtungen als unabhängige Funktionseinheiten, in Patronen aufgebaut, ergeben erhebliche Vorteile, da diese sehr günstig herstellbar sind.

In komplexeren Filteranlagen, zum Beispiel für die industrielle Wasserbehandlung oder auch in Haushaltsgeräten und so weiter, ist es üblich, mit stark sauren Kationentauschern als Tauscherharz zu arbeiten, die mit Natriumchlorid, also Kochsalz, in einem Regenerationsprozeß reinigbar sind beziehungsweise wiederherstellbar sind.

In einer weiteren erfindungsgemäßen Variante ist es günstig, daß der vorgespannte Behälterbereich beweglich ist. Dadurch wird erreicht, daß der Behälterbereich in der Lage ist, die Vorspannung dauerhaft einprägen zu können.

Des Weiteren ist in einer bevorzugten Variante der Erfindung vorgesehen, daß der Behälter zylinderartig, mit einer Mantelfläche, einer Boden- und einer Kopffläche als Behälterbereiche gebildet ist.

Es sind gemäß der Erfindung durchaus Anordnungen möglich, die eine kreisrunde Grundfläche aufweisen oder auch prismatische oder rechteckige Grundflächen besitzen. Dabei kommt es auch nicht darauf an, daß Kopf- und Bodenfläche rechtwinklig zur Mantelfläche orientiert sind. Eine große Variabilität in diesem Bereich erleichtert die Ausgestaltung der Erfindung in den verschiedensten, einzubauenden Geometrien.

Die Erfindung legt sich in keiner Weise darauf fest, welcher Behälterbereich durch die Vorspannung vorgespannt ist. Dies kann sowohl in der Mantelfläche wie auch in der Boden- oder Kopffläche vorgesehen sein. Gemäß der Erfindung ist es dabei auch gleichbedeutend, ob der vorgespannte Behälterbereich Öffnungen, zum Beispiel siebartige Öffnungen, für den Durchlaß von Flüssigkeit in den Behälter aufweist oder ob solche Öffnungen hier nicht vorgesehen sind. Im letzteren Fall sind zum Beispiel starre Siebe vorgesehen und die Vorspannung wird von einem Behälterbereich in der Seitenwand geleistet.

Da der Effekt insbesondere auf eine Längenkontraktion abzielt, ist es günstig, eine sich möglichst lang erstreckende Meßgröße zu haben, da entlang dieser Meßgröße der zu erwartende Effekt um so besser wird, je größer es ist. Hieraus resultiert eine weitere Variante der Erfindung, nach der der Behälter bezüglich seines Durchmessers lang ist und bevorzugt in der Querschnittsfläche der vorgespannte Behälterbereich vorgesehen ist. Als lang bezüglich des Durchmessers wird nach der Erfindung angesehen, wenn sich der Behälter mindestens über das doppelte seines Querschnittes erstreckt. Nach oben ist diesbezüglich keine Grenze gesetzt. Aus einer solchen Anordnung resultieren die verschiedensten Möglichkeiten. Ein solcher Behälter kann zum Beispiel "schlauchartig" oder rohrartig ausgebildet sein, wobei es natürlich auf eine entsprechende starre Wandung ankommt, um den zu messenden Effekt nicht zu beeinträchtigen. Der Behälter ist zum Beispiel mäanderförmig und daher sehr platzsparend anordenbar.

Günstigerweise ist die Anordnung so gewählt, daß sich der Behälter in einem Gehäuse befindet. Alternativ ist vorgesehen, daß zumindest Behälterbereiche Teil des Gehäuses sind. An dem Gehäuse sind günstigerweise Zu- und Ablaufleitungen für die zu reinigende Flüssigkeit anschließbar. Das Gehäuse dichtet letztendlich die ganze Anordnung gegenüber der Umgebung ab. Von Vorteil ist es, wenn Behälterbereiche Teil des Gehäuses sind, wodurch sich der konstruktive Aufwand und der Herstellungsaufwand entsprechend verringern. Soweit aber der Behälter und das Gehäuse zum Beispiel aus unterschiedlichen Materialien gefertigt sind, ist es von Vorteil, Behälter und Gehäuse jeweils einzeln zu fertigen und den Behälter hernach im Gehäuse einzubauen.

Da sich das Tauscherharz in dem Behälter befindet ist es günstig, wenn sich in der Boden- oder Kopffläche und/oder auch in der Mantelfläche Öffnungen, insbesondere siebartige Öffnungen befinden, damit der Behälter von Flüssigkeit durchströmbar ist und so das Tauscherharz mit der Flüssigkeit in Kontakt gelangt, ohne den Behälter zu verlassen.

Wie bereits ausgeführt ist es günstig, wenn die Boden- und/oder Kopffläche beziehungsweise Teile in der Boden- und/oder Kopffläche bezüglich des Behälters beweglich und unter Vorspannung gegen das Tauscherharz anstellbar ist/sind. Es ist gefunden worden, daß bereits durch eine bewegliche Boden- oder Kopffläche der erfindungsgemäße Effekt erreichbar ist. Durch die Vorspannung wird sichergestellt, daß die Boden- oder Kopffläche immer zuverlässig Druck auf das Tauscherharz ausübt und so eine zuverlässige Messung möglich ist.

Gemäß einer weiteren Variante der Erfindung ist dabei nicht zwingend notwendig, daß die gesamte Kopf- oder Bodenfläche bewegbar ausgebildet ist, es reichen hierzu auch Teile in der Boden- beziehungsweise Kopffläche. Grundsätzlich ist es auch möglich, nicht nur einen Behälterbereich unter Vorspannung zu setzen und entsprechend der Erfindung zu nützen, sondern gegebenenfalls am gleichen Behälter auch mehrere Behälterbereiche in dieser Weise auszustatten. Dadurch ist es zum Beispiel möglich entsprechende Redundanzkontrollmessungen vorzunehmen, wodurch natürlich die Zuverlässigkeit des Systems entsprechend steigt. Als unter Vorspannung gesetzte Behälterbereiche sind dabei nicht nur die Boden- oder Kopfflächen zu sehen, in gleicher Weisen zählen zu den unter Vorspannung zu stellende Behälterbereiche auch zumindest ein Bereich der Mantelfäche oder sogar die gesamte Mantelfläche. Es ist zum Beispiel möglich, zumindest einen Bereich der Mantelfläche oder die gesamte Mantelfläche bezüglich des Behälters beweglich und unter Vorspannung gegen das Tauscherharz anstellbar auszugestalten. Ähnlich einer "Bauchbinde" ist zum Beispiel eine entsprechende Meßanordnung um die gesamte bewegliche Mantelfläche legbar und die Ausdehung des Behälters ist so meßbar.

In einer bevorzugten Variante der Erfindung ist vorgesehen, daß die Vorspannung aus der Eigensteifigkeit des Materials des vorgespannten Behälterbereiches abgeleitet ist. Das Material des vorgespannten Behälterbereiches, zum Beispiel der Mantelfläche, der Boden- oder der Kopffläche sind aus derart elastischen Material gebildet, daß sie bei entsprechender Anordnung eine Vorspannung auf das Tauscherharz auszuüben vermögen, wobei die Eigensteifigkeit bewirkt, daß dauerhaft eine entsprechende Kraft auf das Tauscherharzvolumen einbringbar ist.

Alternativ ist vorgesehen, daß die Vorspannung von einem auf den vorgespannten Behälterbereich wirkenden Vorspannelement abgeleitet ist. Hierfür gibt es mehrere Varianten, wie ein Vorspannelement ausgebildet ist. Hierzu können zum Beispiel entsprechende Federzüge, Federn oder auch andere elastische Mittel wie Schaumstoffe oder dergleichen vorgesehen sein. Durch entsprechende Auswahl der Vorspannelemente ist auch die auf das Tauscherharz wirkende Kraft einstellbar, wobei natürlich sichergestellt wird, daß das Tauscherharz durch die Krafteinwirkung nicht zerstört wird.

Der Einsatz von Federn oder anderen, eine Federkraftkonstante aufweisenden Vorspannelementen hat insbesondere den Vorteil, daß über einen längeren Weg eine definierte Vorspannung zur Verfügung steht und somit in diesem längeren Weg die Stellung des unter Vorspannung stehenden Behälterbereiches zuverlässig ermittelbar ist.

In einer weiteren vorteilhaften Ausgestaltung der Erfindung ist vorgesehen, daß Boden- und/oder Kopffläche membranartig ausgebildet sind. Durch die membranartige Ausgestaltung ist es zum Beispiel möglich, die Vorspannung durch eine entsprechende Aufhängung der Membran durch Zugelemente einzuprägen. Die Anordnung einer Membran hat auch den Vorteil, daß sich die Membran möglichst eng und auch exakt an das Tauscherharz anzugleichen vermag. Dabei ist es auch möglich, die Membran derart durchlässig zu bilden, ohne entsprechend große Öffnungen vorzusehen. Günstigerweise ist eine solche Membran mit separaten Vorspannelementen ausgestattet, da diese unter Umständen die entsprechende Eigensteiflichkeit für das Ausbilden einer Vorspannung nicht zu leisten vermag. Es ist aber auch möglich, entsprechend steifere Membranen einzusetzen. Die Erfindung ist hierauf nicht beschränkt.

Günstigerweise ist vorgesehen, daß der vorgespannte Behälterbereich als Sieb ausgebildet ist. Das Sieb ist somit Teil des Behälters, um das Tauscherharz im Behälter zu halten.

In einer weiteren Variante der Erfindung ist vorgesehen, daß zwischen dem beweglichen Behälterbereich und dem hierzu feststehenden Behälterbereich eine Abdichtmembran vorgesehen ist. Üblicherweise wird der feststehende Behälterbereich derjenige Behälterbereich sein, der den größeren Anteil des Behälters bildet. Der vorgespannte Behälterbereich ist in der Regel hierzu kleiner. Um sicherzustellen, daß das Tauscherharz nicht in dem sich unvermeidlich bildenden Spalt zwischen dem beweglichen und unbeweglichen Behälterbereich auszutreten vermag, ist gerade hier eine entsprechende Abdichtmembran vorgesehen. Die Abdichtmembran weist dabei eine entsprechende Beweglichkeit auf, um die sich einstellende Bewegung des vorgespannten, beweglichen Behälterbereiches ausführen zu können.

In einer erfindungsgemäßen Weiterentwicklung ist dabei auch vorgesehen, die Vorspannung aus der Eigensteifigkeit des Materials der Abdichtmembran abzuleiten. In diesem Fall ist die Abdichtmembran zum Beispiel zwischen der Mantelfläche und einem ansonsten starren, als Kopf- oder Bodenfläche ausgebildeten Sieb vorgesehen. Dieses verhältnismäßig steife Sieb erfährt seine Vorspannung durch die Ausgestaltung der Abdichtmembran.

Für die Ausgestaltung dieser Abdichtmembran bestehen mehrere Möglichkeiten. Zum einen ist es möglich eine separate Abdichtmembran zwischen dem beweglichen und unbeweglichen Behälterbereich anzuordnen und diese zum Beispiel durch entsprechende Kleb- oder Schweißverbindungen an den jeweiligen Behälterbereichen zu befestigen.

In einer anderen, erfindungsgemäßen Variante ist aber auch vorgesehen, daß der unter Vorspannung setzbare Behälterbereich einstückig mit dem Behälter oder anderen Behälterbereichen hergestellt ist. Zum Beispiel ist es möglich, die Abdichtmembran in einem entsprechenden Spritzverfahren direkt anzuspritzen und so einen zusätzlichen Aufwand für die Ausgestaltung der Abdichtmembran einzusparen. Gegebenenfalls besteht dann der Behälter zum Beispiel aus zwei Teilen, die durch eine entsprechend stabile Clipverbindung oder dergleichen verbindbar sind. Natürlich ist es auch möglich, den Behälter einstückig mit dem unter Vorspannung zu setzenden Behälterbereich auszubilden und auf einen weiteren Montageschritt zu verzichten.

In einer weiteren bevorzugten Variante ist vorgesehen, daß das Vorspannelement auch gleichzeitig für die Verteilung der in den Behälter einlaufenden Flüssigkeit sorgt. Die gesamte Anordnung ist verhältnismäßig platzsparend zu realisieren. Das Vorspannelement, zum Beispiel eine schraubenförmige Feder oder dergleichen, ist zwischen Gehäuseinnenwand und Behälter angeordnet und liegt in der Flüssigkeit. Sie stützt sich einseitig auf der Gehäuseinnenwand ab, andererseits wird die Vorspannung auf den Behälterbereich eingeprägt. Aufgrund der beengten räumlichen Gegebenheiten ist das Strömungsverhalten für die Flüssigkeit nicht optimal und es entstehen spitzwinklige Abwinklungen, in denen die Flüssigkeit gegebenenfalls unter erheblicher Geschwindigkeit und Druckdifferenzen zu führen ist. Der Einsatz der Vorspannelemente zur Verteilung der in dem Behälter einlaufenden Flüssigkeit, insbesondere in deren Zulauf beziehungsweise vor dem Behälter, erleichtert ein gleichmäßiges Eindringen der Flüssigkeit in den Behälter und reduziert die Gefahr eines Verkippens eines zum Beispiel als Sieb ausgebildeten vorgespannten Behälterbereiches.

Für einen sicheren Betrieb ist es von Vorteil, wenn an dem Behälter mindestens ein Führungselement für den vorgespannten Behälterbereich vorgesehen ist. So wird ein ungewolltes Verhaken und Verklemmen zuverlässig vermieden.

Ein wesentlicher Vorteil der Erfindung ist, daß eine Übersetzungsanordnung zur Erhöhung des Maßes der geänderten Stellung des vorgespannten Behälterbereiches bei einer Volumenänderung vorgesehen ist. Eine solche Übersetzungsanordnung führt dazu, daß eine kleine Dimensionsänderung, die von einer verhältnismäßigen geringen Volumenänderung herrührt, durch die Übersetzungsanordnung doch zu einem verhältnismäßig gut detektierbaren Wert vergrößert wird. Hierzu können zum Beispiel entsprechende Übersetzungsgetriebe oder dergleichen vorgesehen sein. Günstig ist es aber, wenn Übersetzungsanordnungen eingesetzt werden, die die physikalischen Eigenschaften des Tauscherharzes günstig mit ausnutzen oder entsprechend verstärken. Dabei ist es insbesondere für Übersetzungsanordnungen günstig, die beschränkte äußere Abmessungen erreichen, das Volumen des Tauscherharzes möglichst entlang einer Richtung anzuordnen oder den Effekt der Volumenänderung entlang einer Dimension zu konzentrieren, um so ein möglichst großes verwertbares, möglichst wenig verfälschtes Signal zu erhalten. In den Figuren werden hierzu entsprechende Vorschläge gemacht.

Insbesondere ist es von Vorteil, daß die Übersetzungsanordnung durch zwei oder mehrere, zusammenwirkende Behälter mit jeweils eigenen, vorgespannten Behälterbereichen gebildet ist.

Jeder der Behälter besitzt dabei einen eigenen, vorgespannten Behälterbereich, der aufgrund des Ladungszustandes eine entsprechende Dimensionsänderung in der Stellung des vorgespannten Behälterbereiches erfährt. Diese Behälter werden nunmehr so geschickt miteinander gekoppelt, daß die jeweilen Effekte einander verstärken und so ein größeres Signal resultiert. Dabei ist es prinzipiell günstig, daß der erste Behälter die Bewegung des zweiten vorgespannten Behälterbereiches des zweiten Behälters mit ausführt und zusätzlich noch der erste vorgespannte Behälterbereich entsprechende Volumenänderung beziehungsweise Dimensionsänderung erlaubt.

Durch eine solche Anordnung ist es prinzipiell auch möglich, eine kaskadische Anordnung von mehreren Übersetzungsanordnungen hintereinander zu realisieren, durch das Signal entsprechend vergrößert oder verstärkt wird.

Bezüglich der Fließrichtung der Flüssigkeit ist vorgesehen, daß der Behälter von unten nach oben von Flüssigkeit durchflossen ist. Gegebenenfalls ist es auch möglich, daß der Behälter von oben nach unten durchflossen wird.

Es ist günstig, wenn die Stromrichtung der durch den Behälter fließenden Flüssigkeit parallel zu der Kraftnormalen des vorgespannten Behälterbereiches ist. Der vorgespannte Behälterbereich übt eine Kraft auf das Tauscherharz aus. Diese Kraft sei als Kraftnormale definiert, da sie in der Regel rechtwinklig zu dem Behälterbereich, also als Normale, resultiert. Der Vorteil dieser Ausgestaltung ist, daß bei dieser Anordnung der Strom der Flüssigkeit mithilft, eine entsprechende Kraft auf den beweglichen Behälterbereich auszuüben und so sicherzustellen, daß das Tauscherharz entsprechend vorgespannt bleibt. Natürlich ist es möglich, die Stromrichtung unter einem gewissen Winkel mit der Kraftnormalen zu halten, wodurch der erfindungsgemäße Effekt in gleicher Weise, wenn auch nicht mehr so stark, erreicht wird.

Die Erfindung bezieht sich aber auf eine antiparallele Ausrichtung von Stromrichtung und Kraftnormalen, wobei es dann günstig ist, ein entsprechend größer dimensioniertes Vorspannelement einzusetzen.

Des weiteren sieht die Erfindung vor, daß an dem vorgespannten Behälterbereich ein Stößel angeordnet ist, der mit dem Sensor zusammenwirkt. Durch den Stößel wird die Bewegung des vorgespannten, beweglichen Behälterbereiches von dem Behälterbereich abgeleitet. Geschickterweise sind für den Stößel entsprechende Führungen vorteilhafterweise, aber nicht zwingend vorgesehen.

In einer weiteren Ausgestaltung der Erfindung ist vorgesehen, daß der Stößel möglichst mittig beziehungsweise zentral am vorgespannten Behälterbereich angeordnet ist. Durch eine solche Ausgestaltung wird erreicht, daß die maximale Auslenkung des vorgespannten Behälterbereiches vom Stößel aufnehmbar ist und vom Sensor detektierbar ist. Des weiteren ist die mittige beziehungsweise zentrale Anordnung günstig im Hinblick auf den Ausgleich von Niveauschwankungen innerhalb des Tauscherharzes.

Zur Auswertung wird gemäß der Erfindung vorgesehen, daß die Stellung des vorgespannten Behälterbereiches als analoges oder digitales Signal ausgewertet wird. Als digitales Signal wird dabei nicht nur das Betätigen eines Schalters angesehen, sondern es ist auch vorgesehen, gegebenenfalls mehrere diskontinuierliche Werte anzuzeigen. Der Vorteil der Erfindung liegt aber insbesondere darin, eine analoge Information insbesodere kontinuierlich abzuleiten und so eine verhältnismäßig exakte Information über den Beladungszustand des Tauscherharzes zu erlangen.

Gemäß der Erfindung wird vorgeschlagen, daß als Sensor eine optische Sensorik, ein Magnet/Read-System oder dergleichen, vorgesehen ist. Die Anordnung einer optischen Sensorik erlaubt zum Beispiel das Erstellen eines analogen Signales. Ein Magnet/Read-System ist günstigerweise für die Erzeugung eines digitalen Signales einzusetzen. Vorteilhafterweise werden Sensorsysteme eingesetzt, die berührungslos arbeiten, um keine die Messung verfälschende Reibung entstehen zu lassen.

Als optische Sensorik sind insbesondere auch optische Reflektions- oder Laufzeitmessungen einsetzbar.

Sehr gute Ergebnisse wurden mit einer optischen Sensorik erreicht, bei welcher eine elektromagnetisch, insbesondere infrarote Meßstrecke eingesetzt wird, welche aus einer elektromagnetischen, insbesondere infraroten Senderdiode und einer elektromagnetischen, insbesondere infraroten Empfängerdiode gebildet ist, wobei zwischen Sender- und Empfängerdiode das Stößelende hineinzureichen vermag. Die Ausdehnung von Empfänger- und Senderdiode ist dabei so gewählt, daß ein möglichst lineares Signal bezüglich des Eintauchweges des Stößelendes zwischen Sender- und Empfängerdiode resultiert. Daher ist die Längserstreckung von Sender- und Empfängerdiode in der Größenordnung des Verfahrweges des Stößelendes beziehungsweise der resultierenden Auslenkung des unter Vorspannung stehenden Behälterbereiches zwischen den beiden Grenzlagen maximaler und minimaler Beladung des Tauscherharzes. Durch die vorgeschlagene optische Sensorik wird insbesondere in der infrarot arbeitenden Sender- und Empfängerdiode ein lineares, proportionales Signal erzeugt. Dabei wirkt das in den Zwischenraum einstehende Stößelende als Absorptionsmittel für die Strahlung.

Der Einsatz im infraroten elektromagnetischen Spektralbereich hat des weiteren den Vorteil, daß dieser verhältnismäßig störunanfallig, also zuverlässig funktioniert. Günstigerweise werden dabei handelsübliche infrarote Sender- und Empfängerdioden eingesetzt, die verhältnismäßig nah am optischen Spektralbereich liegen.

Selbstverständlich ist es auch möglich, andere Spektralbereiche einzusetzen, um den erfindungsgemäßen Effekt zu erreichen.

Bevorzugterweise ist vorgesehen, daß der Sensor außerhalb des Gehäuses beziehungsweise Behälters angeordnet ist. Dadurch entfallen entsprechende Abdichtungsprobleme. Die Erfindung ist aber hierauf nicht beschränkt. In gleicher Weise ist es natürlich auch möglich, daß der Sensor innerhalb des Gehäuses beziehungsweise Behälters angeordnet ist und durch geeignete Maßnahmen gegen die im Behälter fließende Flüssigkeit abgedichtet ist.

Günstigerweise ist das Gehäuse beziehungsweise der Behälter im Bereich der optischen Sensorik transparent ausgebildet. Die Transparenz bezieht sich natürlich auf die Wellenlänge des Lichtes, welches von der optischen Sensorik eingesetzt wird.

Ein großer Vorteil liegt darin, daß gemäß der Erfindung vorgesehen ist, daß der Sensor zusätzlich zur Bestimmung weiterer physikalischer Parameter eingesetzt wird. Gemäß der Erfindung wird nicht nur die Stellung des vorgespannten Behälterbereiches mit dem Sensor erfaßt, sondern auch andere weitere physikalische Parameter gemessen. Es ist klar, daß durch eine solche Vorgehensweise der Nutzen erhöht wird, wenn der Sensor in geschickter Weise für die Ermittlung weiterer physikalischer Parameter Verwendung findet, ohne hierzu zusätzlichen Kostenaufwand für weitere Bauteile betreiben zu müssen.

Bei den Messungen hat sich gezeigt, daß, sobald das Einlaßventil der Geschirrspülmaschine geöffnet wird, dieser Druckanstieg in der Sensoreinheit ermittelt werden kann. Somit ist es auch vorstellbar, mit der Sensoreinheit eine Überwachung des Einlaßventiles (Siebverschmutzung, defekte Spule) zu integrieren.

Untersuchungen haben auch ergeben, daß die Detektion der Solekonzentration über die Infrarot-Sensorik nicht unbedingt durch das durchscheinende Medium erfolgen muß, sondern daß es auch vorstellbar ist, daß eine quasi Lichtleiterfunktion in dem Meßbereich eingesetzt wird.

In einer speziellen Variante der Erfindung wird dabei vorgesehen, daß der Sensor, insbesondere die optische Sensorik, auch für die Bestimmung des Salzgehaltes, des Härtegrades oder der Regenerationsprodukte der die Vorrichtung durchfließenden Flüssigkeit dient. Dies ist insbesondere in dem dem Regenerationsprozeß nachfolgenden Spülprozeß günstig. Bislang war es notwendig, durch eine verhältnismäßig große Menge von Wasser als Spülflüssigkeit sicherzustellen, daß nach dem Regenerationsprozeß das gesamte Regenerationssalz beziehungsweise deren Abbauprodukte und Reste aus dem Tauscherharz herausgespült ist. Da keine effektive Überwachung zur Verfügung stand, resultierte ein entsprechend großer Wasserverbrauch.

Die eingesetzte optische Sensorik erlaubt es aber auch hier, bei entsprechender Kalibrierung auch den Trübungsgrad und somit den Konzentrationsgrad des Salzes oder sonstiger Abbauprodukte des Regenerationsprozesses, die ausgespült werden, zu bestimmen. Dabei ist der Einsatz des Sensors nicht nur auf den Spülprozeß beschränkt, die Funktionalität kann zu jedem beliebigen anderen Zeitpunkt eingesetzt werden. Es kann zum Beispiel die einströmende oder auch ausströmende Flüssigkeit entsprechend überwacht und kontrolliert werden.

Als integralen Bestandteil dieser Patentanmeldung wird an dieser Stelle insbesondere Bezug genommen auf den Offenbarungsgehalt des Prioritätsdokumentes 10 2004 001 085.4 "Infrarotwegsensorik" vom 04.01.2004, wo insbesondere die vorteilhafte Ausgestaltung einer optischen Sensorik beschrieben ist.

Um die Montage zu erleichtern und auch zu vereinfachen, ist es vorgesehen, daß die Position des Sensors bezüglich der Stellung des vorgespannten Behälterbereiches beziehungsweise des Stößels einstellbar ist. Die Kalibrierung erleichtert sich dadurch erheblich. Da die exakte Position des vorgespannten Behälterbereiches sich erst einstellt, wenn dieser mit Tauscherharz gefüllt, ist auch die Position des Stößels im ungeladenen Zustand des Tauscherharzes erst hernach festgelegt. Um die Kalibrierung zu erleichtern, wird gemäß dieser Variante der Erfindung vorgesehen, daß die Position des Sensors bezüglich des vorgespannten Behälterbereiches beziehungsweise des Stößels einstellbar ist.

Aber auch die kinematische Umkehr gehört zur Erfindung. Hernach ist die Position des vorgespannten Behälterbereiches oder des Stößels für Kalibrierzwecke bezüglich der Stellung des Sensors einstellbar. Zum Beispiel ist die gesamte Behälteranordnung im Gehäuse entsprechend positionierbar und gegenüber dem im Gehäuse festgelegten Sensor verstellbar.

Eine weitere Variante für eine Kalibrierung besteht darin, die Länge des Stößels veränderbar zu machen und somit die Kalbrierung zwischen der Lage des bewegbaren, unter Vorspannung stehenden Behälterbereiches und dem Sensor einzustellen. Hierzu kann zum Beispiel der Stößel eine Zweiteiligkeit mit Gewinde aufweisen oder aber es werden Stößel mit verschiedenen Längen zur Verfügung gestellt, die dann entsprechend eingebaut werden. Auch sind Stößel mit Sollbruchstellen denkbar.

Auch ist es möglich, die Position eines weiteren Behälterbereiches gegenüber dem vorgespannten Behälterbereich für Kalibrierzwecke einzustellen. Da der vorgespannte Behälterbereich eine gewisse Beweglichkeit aufweist, ist in einer weiteren erfindungsgemäßen Variante vorgesehen, daß die Feinabstimmung zum Beispiel dadurch erfolgt, daß die exakte Position des vorgespannten Behälterbereiches durch einen weiteren Behälterbereich eingestellt wird. Dieser zweite Behälterbereich, zum Beispiel die ansonsten starre Deckfläche oder ein anderer Behälterbereich, wird gegen das Tauscherharz so verstellt, zum Beispiel in einem Gewinde verdreht, wodurch sich die Tauscherharzperlen sich entsprechend in ihrer Lage verändern und sich zum Ausgleich im beweglichen Behälterbereich, wo die Vorspannung wirkt, entsprechend bewegen. Diese Anordnung kann daher für Feinkalibrierzwecke eingesetzt werden.

Zur Erfindung zählen auch die verschiedenen Verwendungsbereiche, in welchen die erfindungsgemäße Vorrichtung einsetzbar ist. Hierzu zählen insbesondere wasserverbrauchende Hausgeräte wie Waschmaschinen, Spülmaschinen oder dergleichen. In diesen können eine oder auch mehrere erfindungsgemäße Vorrichtungen vorgesehen sein. Hierzu zählen aber auch industrielle Wasseraufbereitungsanlagen, wie sie zum Beispiel in Stadtwerken und dergleichen eingesetzt werden, wie auch Wasserentsalzungsanlagen oder Wasserenthärtungsanlagen, wie sie zum Beispiel zur Aufbereitung von Wasser für Kondenswasser beziehungsweise Verdampfflüssigkeit in entsprechenden Kühltürmen benötigt werden. In diesen Bereichen wird verhältnismäßig weiches Wasser benötigt, welches durch die Erfindung zuverlässig zur Verfügung gestellt werden kann.

Die Erfindung betrifft aber auch ein Verfahren für die kontinuierliche beziehungsweise quasikontinuierliche Erfassung des Beladungszustandes eines Tauscherharzes im Behälter einer Vorrichtung für die Wasserenthärtung. Die erfindungsgemäße Aufgabe wird auch durch dieses Verfahren gelöst. Dabei wird erfindungsgemäß vorgeschlagen, daß von einem Sensor kontinuierlich die Stellung eines unter Vorspannung gehaltenen Behälterbereiches ermittelt wird und die ermittelten Stellungswerte mit Referenzwerten eines beladenen und/oder entladenen Tauscherharzes verglichen wird und beim Überschreiten von maximalen oder minimalen Beladungszuständen Regenerationsprozesse des Tauscherharzes eingeleitet oder abgestellt werden.

Das erfindungsgemäße Verfahren erlaubt es, den Beladungszustand des Tauscherharzes kontinuierlich beziehungsweise quasikontinuierlich zu messen. Als quasikontinuierlich wird hierbei eine Messung zu diskreten Zeitpunkten angesehen, wobei zu einer quasikontinuierlichen Messung nach der Erfindung auch Messungen zählen, bei welchen das Auswerten des Stellungswertes in gewissen Zeiträumen ausgesetzt ist und der Sensor gegebenenfalls andere Messungen ausführt. Da durch die Erfindung ein sehr exaktes Mittel zum Feststellen des Beladungszustandes zur Verfügung steht, kann durch eine entsprechende Steuerung verhältnismäßig feinfühlung und exakt, daher auch resourcensparend, die Regenerationsprozesse des Tauscherharzes gesteuert werden. Soll ein entsprechend hoher, also maximaler Beladungszustand des Tauscherharzes erreicht, der üblicherweise durch ein entsprechend minimales Volumen gekennzeichnet ist, so wird der Regenerationsprozeß eingeleitet. Umgekehrt wird ein minimaler Beladungszustand dadurch gekennzeichnet, daß das Volumen des Tauscherharzes maximal ist und dann der Regenerationsprozeß wieder beendet wird. Der Verlauf der Regeneration ist daher exakt dem Beladungszustand und auch dem Fortschritt des Regenerationsprozesses anpaßbar.

Dabei beschränkt sich die Erfindung nicht nur darauf, den Regenerationsprozeß zu steuern oder zu überwachen. Gemäß einer weiteren Ausgestaltung der Erfindung wird vorgeschlagen, daß nach dem Regenerationsprozeß, bei welchem Regenerationssalz eingesetzt wird, das Tauscherharz gespült wird und die Regenerationssalzkonzentration beziehungsweise die Konzentration von Regenerationsprodukten beziehungsweise Abfallprodukten, die in der Spülflüssigkeit sind, durch einen Spülsensor überwacht wird. Gerade das Ausspülen des Regenerationssalzes aus dem Tauscherharz wird nach dem Stand der Technik mit einem erheblichen Überschuß an Spülflüssigkeit durchgeführt und der Einsatz eines Spülsensors, der eben gerade diese Konzentration von Regenerationssalz oder Konzentration von Produkten, die aufgrund des Regenerationsprozesses anfallen (Regenerationsprodukte), wird durch den Spülsensor überwacht. Unterschreitet zum Beispiel diese Konzentration einen minimalen Schwellwert, der zum Beispiel empirisch festgelegt worden ist, so kann davon ausgegangen werden, daß die Spülung abgeschlossen ist und der gesamte Regenerationsprozeß einschließlich des Spülprozesses beendet ist. Die Vorrichtung steht dann wieder entsprechend ihrem Einsatzzweck voll zur Verfügung.

Ein erheblicher Vorteil wird dadurch erreicht, daß der Sensor auch gleichzeitig beziehungsweise während des Spülprozesses als Spülsensor dient. Während des Spülprozesses ist der eigentliche Einsatzfall des Sensors nicht gegeben. Durch den Einsatz der Regenerationssole wird das Tauscherharz entsprechend entladen und die Stellung, die durch den Sensor angezeigt wird, erreicht ihren maximalen Wert. Dieser Wert bleibt auch während des Spülprozesses erhalten, da hierbei nur das im Tauscherharz verbleibende Regenerationssalz beziehungsweise die Regenerationsprodukte hiervon herausgeschwemmt werden. Eine Maßverfälschung aufgrund eines nun bereits einsetzenden Enthärtungsprozesses der Spülflüssigkeit ist in der Regel vernachläßigbar. Dagegen wird durch den Sensor, insbesondere wenn dieser eine optische Sensorik wie oben beschrieben ist, die erhebliche Konzentrationsänderung während des Ausspülens durch den Spülsensor beziehungsweise jetzt dem Sensor detektiert und für Steuerungszwecke entsprechend eingesetzt.

Die Erfindung ist in der Zeichnung schematisch dargestellt.

Es zeigen:
- Fig. 1: Im Schnitt eine dreidimensionale Ansicht der Erfindung und
- Fig. 2 bis 6: jeweils vertikale Schnitte durch verschiedene Varianten der erfindungsgemäßen Vorrichtung.

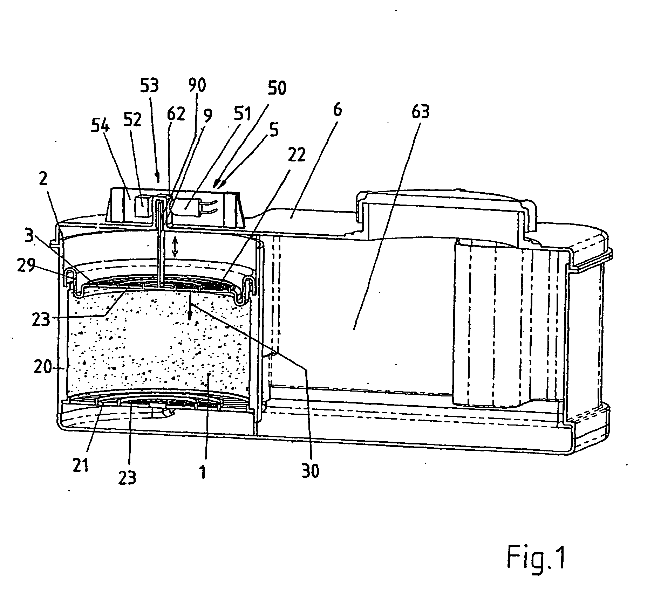

In Fig. 1 ist eine erfindungsgemäße Vorrichtung schematisch gezeigt.

In der Salzkammer 63 wird die Sole erzeugt, welche zur Regeneration des Tauscherharzes 1 benötigt wird. Das Tauscherharz 1 befindet sich dabei in dem Behälter 2. Das Tauscherharz wird während des Enthärtungsprozesses beziehungsweise des Regenerationsprozesses durchströmt.

Der Behälter 2 ist gebildet von einer obenliegenden Kopffläche 22, einer untenliegenden Bodenfläche 21 und einer dazwischen angeordneten Mantelfläche 20. Boden- 21 und Kopffläche 22 besitzen Sieböffnungen 23 oder sind als Siebe ausgebildet, durch die die Durchströmung mit der zu enthärtenden Flüssigkeit, zum Beispiel Wasser, erfolgt.

In dem in Fig. 1 gezeigten Ausführungsbeispiel ist die Kopffläche 22 als unter Vorspannung stehender Behälterbereich 3 ausgebildet. Dieser Behälterbereich 3 ist daher beweglich gelagert, dessen Stellung 4 wird durch den Sensor 5 ausgewertet.

Die auf dem Behälterbereich wirkende Vorspannung 30 ist auf das Tauscherharz 1 hingerichtet.

Zwischen der Mantelfläche 20 und dem unter Vorspannung stehenden Behälterbereich 3, hier der Kopffläche 22, befindet sich die Abdichtmembran 29. Diese elastische Membran 29, welche in der Kopffläche 22 integriert ist, besitzt eine ausreichende Eigensteifigkeit, um die Vorspannung zu erzeugen.

Dadurch wird das Tauscherharz 1 mechanisch einer Vorspannung unterzogen, so daß sich die ergebenden Volumenänderungen, bedingt durch den Beladungszustand des Tauscherharzes 1, kompensiert werden. Im Behälter 2 wird in Abhängigkeit des Beladungszustandes des Tauscherharzes 1 ein größeres oder kleineres Volumen zur Verfügung gestellt. Dies erfolgt dabei so, daß keine zusätzlichen Hohlräume in dem Tauscherharzvolumen entstehen, die die Effizienz des Tauscherharzes 1 erheblich beeinträchtigen würden, da diese Hohlräume als bevorzugte Fließkanäle der Flüssigkeit wirken.

Aufgrund der unterschiedlichen Beladungszustände variiert das Niveau des unter Vorspannung stehenden Behälterbereiches 3.

An diesem Behälterbereich 3, hier der Kopffläche 22, ist mittig ein Stößel 9 befestigt beziehungsweise integriert, welcher in den Sensor 5 beziehungsweise dessen Meßstrecke 53 eintaucht und durch das Eintauchen das Ausgangssignal der elektrischen Schaltung variiert. Der Stößel 9 ist dabei auf der dem Tauscherharz 1 abgewandten Seite angeordnet.

Somit kann durch diesen Aufbau ein analoges Ausgangssignal in Abhängigkeit der Position des unter Vorspannung stehenden Behälterbereiches 3 ermittelt werden.

In dem hier gezeigten Ausführungsbeispiel ist die Fließrichtung der Flüssigkeit von oben nach unten, wenngleich die Anordnung in gleicher Weise auch "auf den Kopf gestellt" funktionabel ist. Günstigerweise ist die Richtung der Vorspannung 30 parallel zur Stromrichtung der durch die Vorrichtung beziehungsweise dem Behälter 2 fließenden Flüssigkeit, wodurch die Vorspannung hierdurch unterstützt wird.

Der in Fig. 1 gezeigte Sensor 5 ist als optische Sensorik 50 ausgebildet. Sie besteht aus einer im infraroten Wellenlängenbereich betriebenen Senderdiode 51 und einer Empfängerdiode 52, die auf einer Platine 54, außerhalb des Gehäuses 6 und daher davon abgedichtet, angeordnet sind.

Der Stößel 9 taucht dabei mit seinem freien Ende 90 in die Meßstrecke 53 zwischen der Senderdiode 51 und der Empfängerdiode 52 ein. Das Gehäuse 6 ist in diesem Bereich mit einem transparenten Bereich 62 ausgestattet, wodurch eine effektive und dichte, gleichwohl auch günstig herzustellende Sensoranordnung realisierbar ist.

Die Senderdiode 51 und die Empfängerdiode 52 sind bevorzugt auf einer Platine 54 montiert, weil die Platine 54 ihrerseits zum Beispiel durch entsprechende Einstellmittel gegenüber dem Gehäuse 6 einstellbar und daher kalibrierbar ist.

Das Gehäuse 6 umfaßt einerseits im linken Bereich den Behälter 2 und im rechten Bereich die Salzkammer 63 und ist, wie auch zum Beispiel der Behälter 2, als Plastikspritzgußteil hergestellt. In dem hier gezeigten Ausführungsbeispiel bildet die Mantelfläche 20 des Behälters 2 auch gleichzeitig einen Teil des Gehäuses 6.

Die Vorspannkraft 30, welche auf dem beweglichen Behälterbereich 3 eingeprägt wird, erfolgt während des Füllvorganges des Tauscherharzes 1 in dem Behälter 2. Hierbei wird die Position des Stößels 9 so kalibriert, daß danach die erforderlichen Signale an die Sensorik übermittelt werden können.

Zur Feinkalibrierung der Position wird die Bodenfläche 21 nach vorheriger Positionierung des Stößels 9 in Position gebracht und dann entsprechend das Gehäuse verschweißt und produziert.

Die in diesem Ausführungsbeispiel gezeigte Sensoranordnung 5 erlaubt eine analoge Auswertung des Signals.

Alternativ ist es möglich, den Stößel 9 mit einem Magneten auszustatten, wodurch in einfacher Weise eine digitale Schaltanordnung realisierbar ist und sich mit einem Grundtypus von entsprechenden Vorrichtungen verschiedene Endgerätevarianten realiseren lassen.

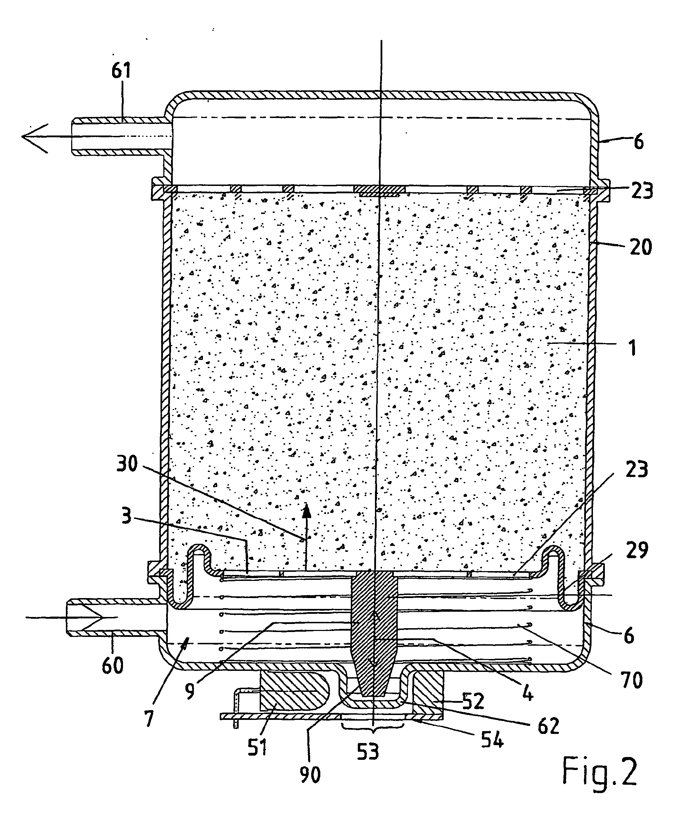

Fig. 2 zeigt ein weiteres Ausführungsbeispiel der Erfindung. In dem hier gezeigten Ausführungsbeispiel ist die Fließrichtung der Flüssigkeit von unten nach oben. An dem Gehäuse 6 ist unten ein Zulauf 60 vorgesehen, im oberen Bereich befindet sich ein Ablauf 61. Auf die hier gezeigten Stutzen werden in bekannter Weise entsprechende Schläuche aufgesteckt und befestigt.

In diesem Ausführungsbeispiel ist die Bodenfläche 21 als unter Vorspannung stehenden, beweglicher Behälterbereich 3 ausgebildet. In diesem Fall wird die Vorspannung nicht aus der seitlichen Abdichtmembran 29 abgeleitet, sondern es ist ein separates Vorspannelement 7 vorgesehen. Zwischen dem unteren Rand der Bodenfläche 21 und dem Gehäuse 6 liegt, von Flüssigkeit umflossen, eine Feder 70 als Vorspannelement 7, die die nach oben gerichtete Vorspannung 30 auf das Tauscherharz 1 einprägt.

In dieser vergrößerten Darstellung ist insbesondere das Eintauchen das Stößelende 90 des Stößels 9 in die Meßstrecke 53 (zwischen der Senderdiode 51 und der Empfängerdiode 52) gut erkennbar. Die Stellung 4 des beweglichen Behälterbereiches 3, welcher aufgrund des unterschiedlichen Beladungszustandes variiert, wird so durch den Sensor 5 ermittelt.

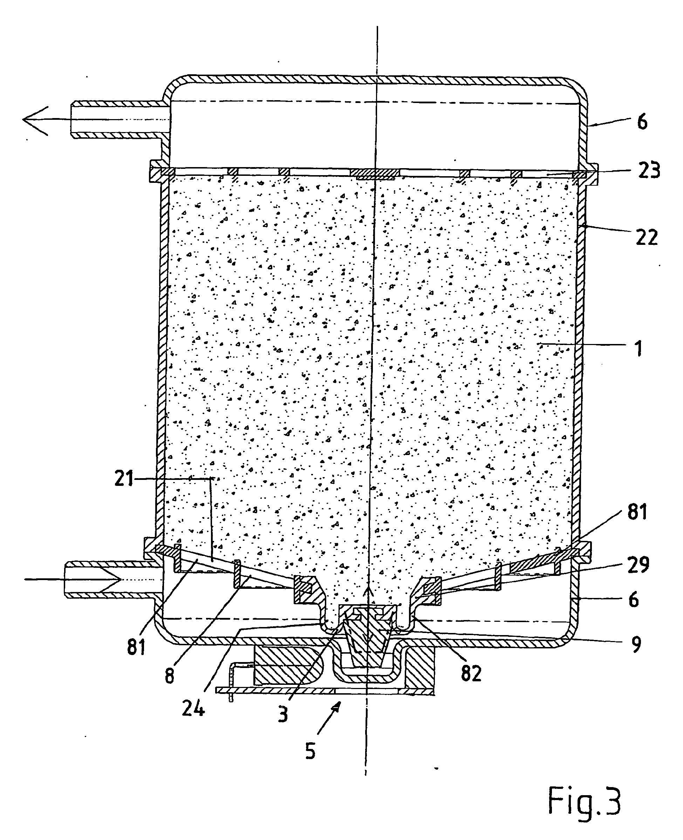

Ähnlich wie in Fig. 2 zeigt auch Fig. 3 eine Anordnung, bei welcher die oben angeordnete Kopffläche (Sieb) 22 starr, feststehend ist.

In diesem Ausführungsbeispiel ist eine Übersetzungsanordnung 8 gezeigt. Der bewegliche, unter Vorspannung stehende Behälterbereich 3 ist als Teil 24 der Bodenfläche 21 ausgebildet.

Die Übersetzungsanordnung 8 ist in dem hier gezeigten Ausführungsbeispiel trichterartig 81 ausgebildet, wodurch sich die Volumenänderung des Tauscherharzes 1 in Richtung auf den tiefsten Punkt 82 des Trichters 81 ausrichtet.

In dem in Fig. 3 gezeigten Ausführungsbeispiel wird auf ein separates Vorspannelement verzichtet. Die Vorspannung wird wieder durch die Abdichtmembran 29 geleistet.

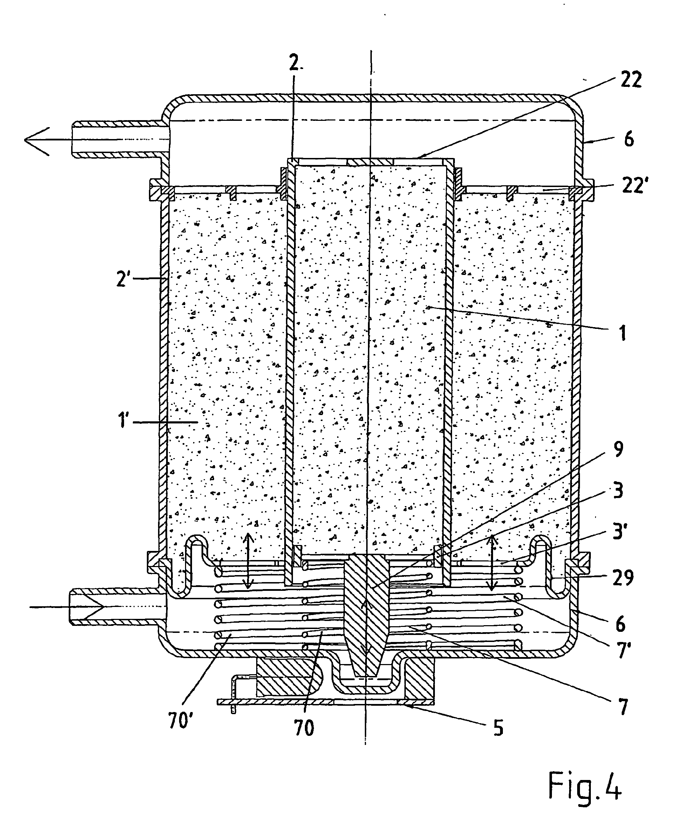

In Fig. 4 ist eine weitere Variante der Übersetzungsanordnung 8 gezeigt. Diese ist von einem ersten, mit Tauscherharz 1 gefüllten Behälter 2 gebildet, wobei die Stellung des vorgespannten, ersten Behälterbereiches 3 des ersten Behälters 2 durch einen Sensor 5 erfaßt wird. Der erste Behälter 2 wird von einem, insbesondere unter Vorspannung stehenden, zweiten Behälterbereich 3' eines zweiten, mit Tauscherharz 1' gefüllten Behälters 2' gehalten und sowohl die Positionsänderung des ersten Behälterbereiches 3 wie auch die Positionsänderung des zweiten Behälterbereiches 3' aufgrund der Volumenänderung der Tauscherharze 1, 1' werden vom Sensor 5 aufgenommen.

Vereinfacht beschrieben sitzt der erste Behälter 2 als eine Art Becher in dem zweiten Behälter 2'. Der erste Behälter 2 ist dabei aber nicht im Gehäuse 6 festgelegt, sondern durch die Verbindung auf den zweiten bewegbaren Behälterbereich 3' bewegbar. Hieraus resultiert, daß sich der gemessene Weg 4 des Stößels 9 im Vergleich zu der Variante nach Fig. 2 nahezu verdoppelt.

Durch diese Variante ist es möglich, verhältnismäßig schmale, nur mit geringer Bauhöhe ausgestattete Vorrichtungen zu schaffen, wobei sich doch eine entsprechend gut detektierbare Wegänderung ergibt.

Für jeden der beiden Behälter 2, 2' sind eigene Vorspannelemente 7, 7' vorgesehen. Diese sind hier zum Beispiel durch koaxial angeordnete Federn 70, 70' realisiert.

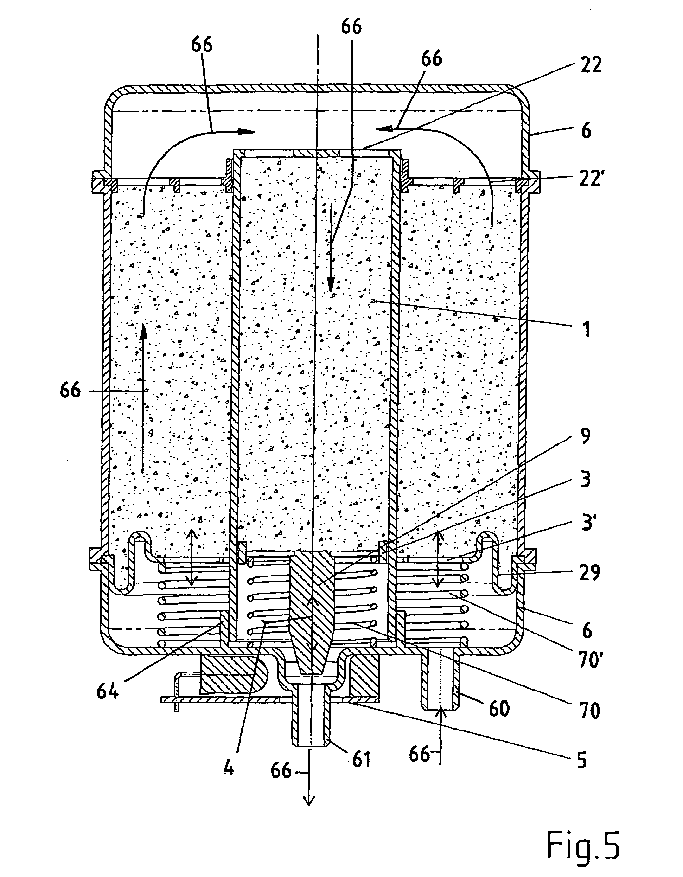

Das in Fig. 5 dargestellte Ausführungsbeispiel ist dem in Fig. 4 gezeigten Beispiel sehr ähnlich. Wiederum ist eine Übersetzungsanordnung 8 vorgesehen. Im Gegensatz zu der Ausgestaltung nach Fig. 4 ist aber nicht der untere Rand des ersten Behälters 2 an dem zweiten beweglichen Behälterbereich 3' angeordnet, sondern der untere Rand des ersten Behälters 2 taucht in einen am Gehäuse 6 angeordneten Ring 64 ein, der erste Behälter 2 ist weiter oben mit dem zweiten beweglichen, unter Vorspannung stehenden Behälter 3' verbunden.

Das hier gezeigte Ausführungsbeispiel zeigt die Zu- und Ablaufleitungen 60, 61 auf einer Seite des Gehäuses 6, nämlich im unteren Bereich. Es entsteht dadurch ein Anströmbereich durch das außenliegende zweite Tauscherharzvolumen 1', die Fließrichtung der Flüssigkeit ist mit den Pfeilen 66 gekennzeichnet. Nachdem die Flüssigkeit im äußeren Ring nach oben geströmt ist, wird das erste Tauscherharz 1 durchströmt und die so enthärtete Flüssigkeit verläßt die Anordnung über den Ablauf 61. Eine solche Anordnung ist zum Beispiel als Patrone, als eigenständige Funktionseinheit, zum Beispiel für den Einsatz in Kaffeeautomaten und dergleichen einsetzbar.

Durch die Anordnung von Zu- und Ablaufleitung 60, 61 auf der gleichen Seite wird das Aufstecken dieser Einheit und daher die Montage erheblich erleichtert.

In den Ausführungsbeispielen nach Fig. 1 bis Fig. 5 ist jeweils entweder die Bodenfläche 21 oder die Kopffläche 22 (also die Siebe) als unter Vorspannung bringbarer Behälterbereich ausgebildet.

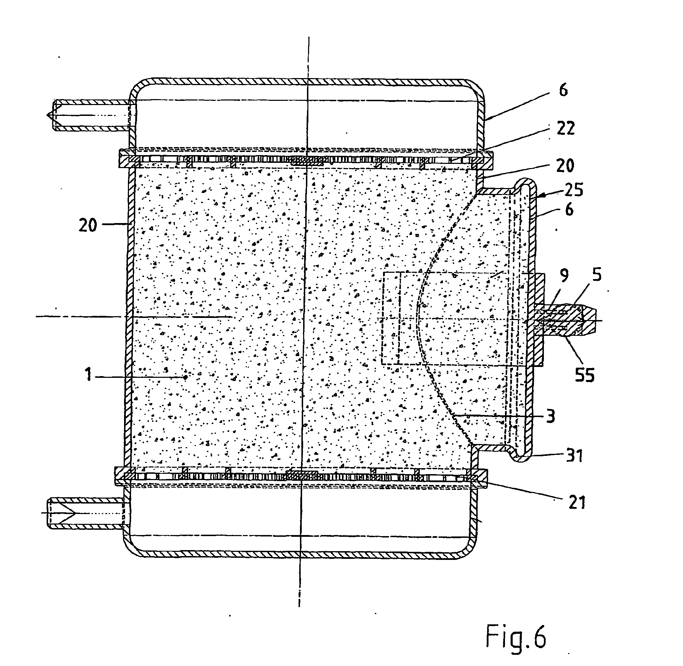

In dem in Fig. 6 gezeigten Ausführungsbeispiel wird alternativ vorgeschlagen, die Mantelfläche 20 beziehungsweise einen Bereich 25 der Mantelfläche 20 als unter Vorspannung bringbaren Behälterbereich 3 auszugestalten.

Der Behälter 2 ist in dem hier gezeigten erfindungsgemäßen Beispiel zylinderartig ausgebildet. Der Bereich 25 der Mantelfläche 20, der unter Vorspannung bringbar ist, sitzt seitlich auf der Mantelfläche glockenartig auf. Es ist ein Wulst 31 vorgesehen, der es erlaubt, daß sich der Bereich 25 unter Vorspannung begibt und beweglich ist. Der Bereich 25 ist zum Beispiel plattenartig ausgebildet und trägt den Stößel 9, der in bekannter Weise mit dem Sensor 5 zusammenwirkt. Zum Befestigen des Sensors 5 dient eine Platinenmanschette oder Brücke 55. Die Platine ist mit dem übrigen, feststehenden Behälter 2 verbunden.

Alternativ ist es dabei auch möglich, die gesamte Mantelfläche 20 als beweglichen Behälterbereich 3 auszubilden. Der Vorteil einer solchen Anordnung liegt darin, daß der Sensor 5 nicht überhalb oder unterhalb des Behälters 2, sondern seitlich daneben angeordnet ist. Dies kann dazu beitragen eine Lösung zu bilden, wenn zum Beispiel beengte Platzverhältnisse bestehen.

Für alle vorgenannten Ausführungsbeispiele ist es natürlich auch möglich, die Bodenfläche 21 und Kopffläche 22 als Sieb 23 auszubilden. Gemäß der Erfindung ist es dabei auch möglich, diese Siebe 23 starr oder beweglich mit einer ausreichenden Eigensteiflichkeit oder mit Hilfe eines Vorspannelementes 7 zu realisieren.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

## Patentansprüche

1. Vorrichtung für die Wasserenthärtung, die mindestens einen mit einem Tauscherharz (1) gefüllten Behälter (2) aufweist, wobei zumindest ein Behälterbereich (3) derart unter Vorspannung gesetzt ist, dass auch bei veränderter Volumenausdehnung des Tauscherharzes (1) im Behälter (2) alle Behälterinnenwände an dem Tauscherharz (1) anliegen und die aufgrund der veränderten Volumenausdehnung resultierende veränderte Stellung (4) des vorgespannten Behälterbereichs (3) durch einen Sensor (5) oder eine Anzeigeneinheit erfaßt wird, **dadurch gekennzeichnet, daß** die Vorspannung auf das gesamte, im Behälter befindliche Tauscherharz (1) wirkt.

2. Vorrichtung nach Anspruch 1, **dadurch gekennzeichnet, dass** der vorgespannte Behälterbereich (3) aus derart elastischem Material gebildet ist, daß er eine Vorspannung auf das Tauscherharz auszuüben vermag.

3. Vorrichtung nach einem oder beiden der vorhergehenden Ansprüche, **dadurch gekennzeichnet, dass** der vorgespannte Behälterbereich (3) als Sieb ausgebildet ist und/oder der Behälterbereich (3) beweglich gelagert ist und dem Sensor oder der Anzeigeneinheit das gesamte Tauscherharzvolumen als Meßgröße für die Volumenänderung zur Verfügung steht und/oder der Behälterbereich (3) beweglich gelagert ist und der Sensor oder die Anzeigeneinheit die Volumenänderung des Tauscherharzvolumens erfaßt bzw. anzeigt.

4. Vorrichtung nach einem oder mehreren der vorhergehenden Ansprüche, **gekennzeichnet durch** einen bezüglich der Ionenkonzentration negativen Volumenausdehnungskoeffizienten des Tauscherharzes (1).

5. Vorrichtung nach einem oder mehreren der vorhergehenden Ansprüche, **dadurch gekennzeichnet, daß** stark saure Kationentauscher oder schwach saure Kationentauscher als Tauscherharz (1) vorgesehen sind.

6. Vorrichtung nach einem oder mehreren der vorhergehenden Ansprüche, **dadurch gekennzeichnet, daß** der vorgespannte Behälterbereich (3) beweglich ist und/oder der Behälter (2) zylinderartig, mit einer Mantelfläche (20), einer Boden- (21) und einer Kopffläche (22) als Behälterbereiche gebildet ist und/oder sich der Behälter (2) in einem Gehäuse (6) befindet oder zumindest Behälterbereiche (20, 21, 22) Teil eines Gehäuses (6) sind und an dem Gehäuse (6) Zu- und Ablaufleitungen (60, 61) anschließbar sind.

7. Vorrichtung nach einem oder mehreren der vorhergehenden Ansprüche, **dadurch gekennzeichnet, daß** sich im vorgespannten Behälterbereich, in der Boden- (21), Kopf- (22) und/oder der Mantelfläche (20) Öffnungen (23), insbesondere siebartige Öffnungen befinden, damit der Behälter (2) von Flüssigkeit durchströmbar ist und/oder in dem vorgespannten Behälterbereich (3) keine Öffnungen für die Flüssigkeit vorgesehen sind und/oder der Behälter (2) bezüglich seines Durchmessers lang ist, und bevorzugt in der Querschnittsfläche der vorgespannte Behälterbereich (3) vorgesehen ist.

8. Vorrichtung nach einem oder mehreren der vorhergehenden Ansprüche, **dadurch gekennzeichnet, daß** die Boden- (21) und/oder Kopffläche (22) beziehungsweise Teile (24) in der Boden- und/oder Kopffläche bezüglich des Behälters (2) beweglich und als Behälterbereich unter Vorspannung gegen das Tauscherharz (1) anstellbar ist/sind.

9. Vorrichtung nach einem oder mehreren der vorhergehenden Ansprüche, **dadurch gekennzeichnet, daß** zumindest ein Bereich (25) der Mantelfläche (20) oder die gesamte Mantelfläche (20) bezüglich des Behälters (2) beweglich und unter Vorspannung als Behälterbereich gegen das Tauscherharz (1) anstellbar ist/sind.

10. Vorrichtung nach einem oder mehreren der vorhergehenden Ansprüche, **dadurch gekennzeichnet, daß** die Vorspannung aus der Eigensteifigkeit des Materials des vorgespannten Behälterbereiches (3) abgeleitet ist und/oder die Vorspannung von einem auf den vorgespannten Behälterbereich wirkenden Vorspannelement (7) zum Beispiel eine Feder, ein Schaumstoff oder dergleichen, abgeleitet ist und/oder der vorgespannte Behälterbereich (3) beziehungsweise Boden- (21) oder Kopffläche (22) membranartig ausgebildet sind.

11. Vorrichtung nach einem oder mehreren der vorhergehenden Ansprüche, **dadurch gekennzeichnet, daß** zwischen dem beweglichen Behälterbereich (3) und dem hierzu feststehenden Behälterbereich (2) eine Abdichtmembran (29) vorgesehen ist und/oder die Vorspannung aus der Eigensteifigkeit des Materials der Abdichtmembran (29) abgeleitet ist und/oder der unter Vorspannung setzbare Behälterbereich (3) einstückig mit dem Behälter (2) oder anderen Behälterbereichen hergestellt ist.

12. Vorrichtung nach einem oder mehreren der vorhergehenden Ansprüche, **dadurch gekennzeichnet, daß** das Vorspannelement (7) auch gleichzeitig für eine Verteilung der in den Behälter (2) einlaufenden Flüssigkeit sorgt und/oder daß an dem Behälter (2) mindestens ein Führungselement für den vorgespannten Behälterbereich (3) vorgesehen ist und/oder **gekennzeichnet durch** eine Übersetzungsanordnung (8) zur Erhöhung des Maßes der geänderten Stellung (4) des vorgespannten Behälterbereichs (3) bei einer volumenänderung.

13. Vorrichtung nach einem oder mehreren der vorhergehenden Ansprüche, **dadurch gekennzeichnet, daß** die Übersetzungsanordnung (8) durch einen trichterartigen, starren, im Übrigen geschlossenen Behälter (81) gebildet ist und am tiefsten Punkt (82) des Trichters (81) der vorgespannte Behälterbereich (3) angeordnet ist und/oder die Übersetzungsanordnung (8) durch zwei oder mehrere, zusammenwirkende Behälter (2, 2') mit jeweils eigenen, vorgespannten Behälterbereichen (3, 3') gebildet ist und/oder die Übersetzungsanordnung (8) von einem ersten, mit Tauscherharz (1) gefüllten Behälter (2) gebildet ist und die Stellung des vorgespannten, ersten Behälterbereiches (3) des ersten Behälters (2) durch einen Sensor (5) erfaßt wird, wobei der erste Behälter (2) von einem, insbesondere unter Vorspannung stehenden, zweiten Behälterbereich (3') eines zweiten, mit Tauscherharz (1) gefüllten Behälters (2') gehalten ist und sowohl die Positionsänderung des ersten Behälterbereiches (3) wie auch die Positionsänderung des zweiten Behälterbereiches (3') aufgrund der Volumenänderung der Tauscherharze (1, 1') vom Sensor (5) aufgenommen wird und/oder **gekennzeichnet durch** eine kaskadische Anordnung von mehreren Übersetzungsanordnungen (8).

14. Vorrichtung nach einem oder mehreren der vorhergehenden Ansprüche, **dadurch gekennzeichnet, daß** der Behälter (2) von unten nach oben von Flüssigkeit durchflossen wird und/oder die Stromrichtung der durch den Behälter (2) fließenden Flüssigkeit parallel zu der Kraftnormalen des vorgespannten Behälterbereiches (3) ist und/oder Zu- und Ablaufleitungen (60, 61) auf einer Seite des Gehäuses (6) angeordnet sind.

15. Vorrichtung nach einem oder mehreren der vorhergehenden Ansprüche, **dadurch gekennzeichnet, daß** an dem vorgespannten Behälterbereich (3) ein Stößel (9) angeordnet ist, der mit dem Sensor (5) zusammenwirkt und/oder der Stößel (9) auf der dem Tauscherharz (1) abgelegenen Seite des Behälterbereiches (3) angeordnet ist und/oder der Stößel (9) möglichst mittig beziehungsweise zentral am vorgespannten Behälterbereich (3) angeordnet ist und/oder die Stellung des vorgespannten Behälterbereichs (3) als analoges oder digitales Signal ausgewertet wird.

16. Vorrichtung nach einem oder mehreren der vorhergehenden Ansprüche, **dadurch gekennzeichnet, daß** ein Druckbeziehungsweise Bewegungsschalter als Sensor (5) vorgesehen ist und/oder als Sensor (5) eine optische Sensorik (50), ein Magnet/Read-System oder dergleichen vorgesehen ist und/oder als optische Sensorik eine optische Reflexions- oder Laufzeitmeßanordnung vorgesehen ist und/oder als optische Sensorik (50) eine elektromagnetisch, insbesondere infrarote Meßstrecke (53), bestehend aus einer elektromagnetischen, insbesondere infraroten Sendediode (51) und einer elektromagnetischen, insbesondere infraroten Empfängerdiode (52) gebildet ist, wobei zwischen Sender- und Empfängerdiode das Stößelende (90) hineinzureichen vermag.

17. Vorrichtung nach einem oder mehreren der vorhergehenden Ansprüche, **dadurch gekennzeichnet, daß** der Sensor (5) außerhalb des Gehäuses (6) oder Behälters (2) angeordnet ist beziehungsweise hiervon abgedichtet ist und/oder das Gehäuse (6) beziehungsweise der Behälter (2) im Bereich der optischen Sensorik (50) transparent ausgebildet ist und/oder der Sensor (5) zusätzlich zur Bestimmung weiterer physikalischer Parameter eingesetzt wird.

18. Vorrichtung nach einem oder mehreren der vorhergehenden Ansprüche, **dadurch gekennzeichnet, daß** der Sensor (5), insbesondere die optische Sensorik (50), auch für die Bestimmung des Salzgehaltes, des Härtegrades oder der Regenerationsprodukte der die Vorrichtung durchfließenden Flüssigkeit dient.

19. Vorrichtung nach einem oder mehreren der vorhergehenden Ansprüche, **dadurch gekennzeichnet, daß** die Position des Sensors (5) für Kalibrierzwecke bezüglich der Stellung des vorgespannten Behälterbereiches (3) beziehungsweise des Stößels (9) einstellbar ist und/oder die Position des vorgespannten Behälterbereiches (3) oder des Stößels (9) für Kalibrierzwecke bezüglich der Stellung des Sensors (5) einstellbar ist und/oder die Position eines weiteren Behälterbereichs gegenüber dem vorgespannten Behälterbereichs (3) für Kalibrierzwecke einstellbar ist.

20. Vorrichtung nach einem oder mehreren der vorhergehenden Ansprüche, **gekennzeichnet durch** einen für Justierzwecke in seiner Länge veränderbaren Stößel (9) und/oder eine mechanische Anzeigeneinheit, in welcher die Stellung des Stößels (9) erkennbar ist.

21. Vorrichtung nach einem oder mehreren der vorhergehenden Ansprüche, **dadurch gekennzeichnet, daß** der Sensor (5) neben, unterhalb oder überhalb des Behälters (2) angeordnet ist.

22. Wasserverbrauchende Hausgeräte, wie Waschmaschinen, Spülmaschinen oder dergleichen, Wasseraufbereitungsanlagen, Wasserentsalzungs- und Wasserenthärtungsanlagen und dergleichen mit mindestens einer Vorrichtung nach einem oder mehreren der vorhergehenden Ansprüche.

23. Verfahren für die kontinuierliche beziehungsweise quasikontinuierliche Erfassung des Beladungszustandes eines Tauscherharzes im Behälter einer Vorrichtung für die Wasserenthärtung, insbesondere nach einem oder mehreren der vorhergehenden Ansprüche 1 bis 22, wobei von einem Sensor kontinuierlich beziehungsweise quasikontinuierlich die Stellung eines unter Vorspannung gehaltenen Behälterbereiches ermittelt wird und die ermittelten Stellungswerte mit Referenzwerten eines beladenen und/oder entladenen Tauscherharzes verglichen werden, und bei Überschreiten von maximalen oder minimalen Beladungszuständen Regenerationsprozesse des Tauscherharzes eingeleitet oder abgestellt werden.

24. Verfahren nach Anspruch 23, **dadurch gekennzeichnet, daß** nach dem Regenerationsprozeß mit Regenerationssalz das Tauscherharz gespült wird und die Regenerationssalzkonzentration beziehungsweise die Konzentration von Regenerationsprodukten der Spülflüssigkeit durch einen Spülsensor überwacht wird.

25. Verfahren nach einem oder beiden der vorhergehenden Ansprüche 23 und 24, **dadurch gekennzeichnet, daß** der Sensor auch gleichzeitig beziehungsweise während des Spülprozesses als Spülsensor dient.

## Claims

1. Device for water softening having at least one container (2) filled with exchange resin (1), at least one container region (3) being under pre-stress in such a way that even when the expansion of the exchange resin (1) in the container (2) changes all interior walls of the container are in contact with the exchange resin (1), and the position (4) resulting because of the changed expansion of volume of the pre-stressed container region (3) is collected by a display unit, **characterised in that** the pre-stress acts on the entire exchange resin (1) in the container.

2. Device according to claim 1, **characterised in that** the entire pre-stressed container region (3) is formed by a material which is flexible in such a way that it is able to exercise pre-stress on the exchange resin.

3. Device according to one or both of the preceding claims, **characterised in that** the pre-stressed container region (3) is designed as sieve, and/or the container region (3) is supported movably, and the complete exchange resin volume is available for the sensor or the display unit as measurable variable for the volume change, and/or the container region (3) is supported movably, and the sensor or the display unit collects or displays the volume change of volume of the exchange resin.

4. Device according to one or more of the preceding claims, **characterised by** a negative volume expansion coefficient of the exchange resin (1) with regard to the concentrations of the ions.

5. Device according to one or more of the preceding claims, **characterised in that** strongly acid cation exchangers or weakly acid cation exchangers are provided as exchange resin (1).

6. Device according to one or more of the preceding claims, **characterised in that** the pre-stressed container region (3) is movable, and/or the container (2) is formed cylinder-like, with a surface area (20), a bottom surface (21) and a top surface (22) as container regions, and/or the container (2) is in a housing (6), or at least container regions (20, 21, 22) are part of a housing (6), and supply and discharge conduits (60, 61) can be connected to the housing (6).

7. Device according to one or more of the preceding claims, **characterised in that** in the pre-stressed container region, in the bottom surface (21), the top surface (22) and/or the surface area (20) openings (23), in particular sieve-like openings, are provided so that the container (2) can be flown through by liquid, and/or in the pre-stressed container region (3) no openings are provided for the liquid, and/or the container (2) is long compared with its diameter, and preferably in the cross section surface the pre-stressed container region (3) is provided.

8. Device according to one or more of the preceding claims, **characterised in that** the bottom surface (21) and/or the top surface (22), or parts (24) in the bottom surface and/or the top surface are movable with regard to the container (2), and can be set as container region with pre-stress towards the exchange resin (1).

9. Device according to one or more of the preceding claims, **characterised in that** at least a region (25) of the surface area (20) or the entire surface area (20) is movable with regard to the container (2) and can be set with pre-stress as container region towards the exchange resin (1).

10. Device according to one or more of the preceding claims, **characterised in that** the pre-stress is derived from the inherent stability of the material of the pre-stressed container region (3), and/or the pre-stress is derived from a pre-stress element (7), for example a spring, foamed material or the like, acting on the pre-stressed container region, and/or the pre-stressed container region (3) or the bottom surface (21) or the top surface (22) are designed membrane-like.

11. Device according to one or more of the preceding claims, **characterised in that** between the movable container region (3) and the container region (2) stationary to it a sealing membrane (29) is provided, and/or the pre-stress is derived from the inherent stability of the material of the sealing membrane (29), and/or the container region (3) which can be pre-stressed is designed in one piece with the container (2) or other container regions.

12. Device according to one or more of the preceding claims, **characterised in that** the pre-stress element (7) also at the same time provides distribution of the liquid flowing into the container (2), and/or that at the container (2) at least one guide element is provided for the pre-stressed container region (3), and/or **characterised by** a compilation arrangement (8) for increasing the dimension of the changed position (4) of the pre-stressed container region (3) when the volume changes.

13. Device according to one or more of the preceding claims, **characterised in that** the compilation arrangement (8) is formed by a funnel-like, rigid, otherwise closed container (81), and at the lowest point (82) of the funnel (81) the pre-stressed container region (3) is arranged, and/or the compilation arrangement (8) is formed by two or more interacting containers (2, 2') each having their own pre-stressed container regions (3, 3'), and/or the compilation arrangement (8) is formed by a first container (2) filled with exchange resin (1), and the position of the first pre-stressed container region (2) is collected by a sensor (5), the first container (2) being held by a second container region (3'), which is in particular pre-stressed, of a second container (2') filled with exchange resin (1), and the change of position of the first container region (3) as well as the change of position of the second container region (3') is recorded by a sensor (5) because of the change of volume of the exchange resins (1, 1'), and/or **characterised by** a cascade arrangement of several compilation arrangements (8).

14. Device according to one or more of the preceding claims, **characterised in that** the container (2) is flown through from the bottom to the top by liquid, and/or the flow direction of the liquid flowing through the container (2) is parallel to the normal line of force of the pre-stressed container region (3), and/or the supply and discharge conduits (60, 61) are arranged on one side of the housing (6).

15. Device according to one or more of the preceding claims, **characterised in that** at the pre-stressed container region (3) a ram (9) interacting with the sensor (5) is arranged, and/or the ram (9) is arranged on the side of the container region (3) facing away from the exchange resin (1), and/or the ram (9) is arranged as axially or centrally as possible at the pre-stressed container region (3), and/or the position of the pre-stressed container region (3) is evaluated as analogous or digital signal.

16. Device according to one or more of the preceding claims, **characterised in that** a pressure switch or motion switch, respectively, is provided as sensor (5), and/or as sensor (5) optical sensor technics (50), a magnet/read system or the like are provided, and/or as optical sensor technics an optical reflection or running time measuring device is provided, and/or as optical sensor technics (50) an electro-magnetic, in particular infra-red, measured length (53) is provided comprising an electro-magnetic, in particular infra-red, transmitting diode (51) and an electro-magnetic, in particular infra-red, receiving diode (52), between the transmitting and the receiving diode the end (90) of the ram being able to extend.

17. Device according to one or more of the preceding claims, **characterised in that** the sensor (5) is arranged outside the housing (6) or the container (2), or is sealed from it, and/or the housing (6) or the container (2), respectively, is designed transparently in the region of the optical sensor technics (50), and/or the sensor (5) is used additionally for determining further physical parameters.

18. Device according to one or more of the preceding claims, **characterised in that** the sensor (5), in particular the optical sensor technics (50), also serves for determining the salt content, the degree of hardness or the regeneration products of the liquid flowing through the device.

19. Device according to one or more of the preceding claims, **characterised in that** the position of the sensor (5) can be adjusted for calibrating purposes with regard to the position of the pre-stressed container region (3) or the ram (9), respectively, and/or the position of the pre-stressed container region (3) or the ram (9) can be adjusted with regard to the position of the sensor (5), and/or the position of another container region can be adjusted towards the pre-stressed container region (3) for calibrating purposes.

20. Device according to one or more of the preceding claims, **characterised by** a ram (9) the length of which can be altered for adjustment purposes, and/or a mechanic display unit in which the position of the ram (6) can be recognised.

21. Device according to one or more of the preceding claims **characterised in that** the sensor (5) is arranged beside, below or above the container (2).

22. Water consuming household appliances like washing machines, dish washers or the like, water treatment devices, water desalting devices and water softening devices and the like with at least one device according to one or more of the preceding claims.

23. Method for the continuous or quasi-continuous collecting of the charging condition of an exchange resin in the container of a device for water softening, in particular according to one or more of the preceding claims 1 to 22, where the position of a pre-stressed container region is determined continuously or quasi-continuously by a sensor and the determined position values are compared with reference values of a charged and/or discharged exchange resin, and, if maximal or minimal charging conditions are exceeded, regeneration processes are introduced or stopped.

24. Method according to claim 23, **characterised in that** after the regeneration process the exchange resin is rinsed with regeneration salt, and the concentration of the regeneration salt or the concentration of regeneration products of the rinsing liquid is monitored by a rinsing sensor.

25. Method according to one or both of the preceding claims 23 and 24, **characterised in that** the sensor also serves at the same time or during the rinsing process as rinsing sensor.

## Revendications

1. Dispositif adoucisseur d'eau comportant au moins un récipient (2) rempli de résine échangeuse d'ions (1), dont une partie (3) au moins du récipient est sous tension mécanique permanente afin de garantir un contact constant entre les parois du récipient (2) et la résine échangeuse d'ions (1) lors de variations de volume de ladite résine provoquant le déplacement d'une des parois de la partie (3) du récipient sous tension mécanique constante au-delà de la position normale (4), déplacement qui est détecté par un capteur (5) ou par un dispositif d'affichage, **caractérisé en ce que** la tension permanente s'applique sur la totalité de la résine échangeuse d'ions (1) située à l'intérieur du récipient.

2. Dispositif selon la revendication 1, **caractérisé en ce que** la partie (3) du récipient mise sous tension mécanique permanente est fabriquée en un matériau élastique permettant le maintien de la tension mécanique permanente sur la résine échangeuse d'ions.

3. Dispositif selon une ou deux des revendications précédentes, **caractérisé en ce que** la partie (3) du récipient mise sous tension mécanique permanente est configurée comme un tamis et/ou **en ce que** la partie (3) du récipient est maintenue mobile de façon à ce que le capteur ou l'unité d'affichage permette de saisir les variations de volume de la totalité de la résine échangeuse d'ions comme mesure et/ou **en ce que** la partie (3) du récipient est maintenue mobile et **en ce que** le capteur ou l'unité d'affichage saisit les variations du volume de la résine échangeuse d'ions.

4. Dispositif selon une ou plusieurs des revendications précédentes, **caractérisé par** un coefficient de dilatation volumique négatif de la résine échangeuse d'ions (1) en relation avec à une variation de la concentration des ions.

5. Dispositif selon une ou plusieurs des revendications précédentes, **caractérisé par** la présence d'échangeur cationique faiblement ou très acide servant de résine échangeuse d'ions (1).

6. Dispositif selon une ou plusieurs des revendications précédentes, **caractérisé en ce que** la partie (3) du récipient est mobile et/ou **en ce que** le récipient (2) possède un corps cylindrique (20), une surface inférieure (21) et une surface supérieure (22) et/ou **en ce que** le récipient (2) est situé à l'intérieur d'un châssis (6), **en ce qu'**au moins une des parties (20, 21, 22) du récipient fait partie d'un châssis (6) et **en ce que** les conduits d'entrée et de sortie (60, 61) peuvent être branchés sur le châssis (6).

7. Dispositif selon une ou plusieurs des revendications précédentes, **caractérisé en ce que** des ouvertures (23) existent sur les surfaces inférieure (21), supérieure (22) et/ou cylindrique (20) de la partie du récipient mise sous tension mécanique permanente, formant en particulier un treillis permettant à un liquide de traverser le récipient (2) et/ou **en ce qu'**aucune ouverture destinée au passage du liquide n'est présente dans la partie (3) du récipient et/ou **en ce que** le récipient (2) possède une longueur bien supérieure à son diamètre et une partie du récipient (3) mise sous tension mécanique permanente limitée par une surface préférentiellement parallèle à la section du récipient.

8. Dispositif selon une ou plusieurs des revendications précédentes, **caractérisé en ce que** la surface inférieure (21) et/ou supérieure (22) ou les parties (24) de la surface inférieure et/ou supérieure de la partie (3) du récipient sont mobiles par rapport au récipient (2) et peuvent être mises en contact avec la résine échangeuse d'ions (1).

9. Dispositif selon une ou plusieurs des revendications précédentes, **caractérisé en ce qu'**au moins une partie (25) voire la totalité de la surface cylindrique (20) est mobile par rapport au récipient (2) et s'applique sous une force mécanique permanente contre la résine échangeuse d'ions (1).

10. Dispositif selon une ou plusieurs des revendications précédentes, **caractérisé en ce que** la tension mécanique permanente existe grâce à une rigidité du matériau formant la partie (3) du récipient et/ou **en ce que** la tension mécanique permanente est produite par un élément tendeur (7), par exemple un ressort, une mousse, un élément ou un matériau similaire et/ou **en ce que** la partie (3) du récipient possède une surface inférieure (21) ou supérieure (22) en forme de membrane.

11. Dispositif selon une ou plusieurs des revendications précédentes, **caractérisé en ce qu'**il existe une membrane d'étanchéité (29) entre la partie mobile (3) et le récipient immobile (2) et/ou **en ce que** la tension mécanique permanente existe grâce à une rigidité du matériau formant la membrane d'étanchéité (29) et/ou **en ce que** la partie (3) pouvant être mise sous tension mécanique permanente forme une seule pièce avec le récipient (2) ou avec d'autres parties de ce récipient.

12. Dispositif selon une ou plusieurs des revendications précédentes, **caractérisé en ce que** l'élément tendeur (7) sert également à distribuer le liquide rentrant dans le récipient (2) et/ou **en ce qu'**au moins un élément de guidage pour la partie (3) mise sous tension mécanique permanente est situé au niveau du récipient (2) et/ou est **caractérisé par** l'existence d'un dispositif de multiplication (8) afin d'augmenter les variations de la position (4) de la partie (3) du récipient résultant des variations du volume de cette partie.

13. Dispositif selon une ou plusieurs des revendications précédentes, **caractérisé en ce que** le dispositif de multiplication (8) est formé par un élément (81) en forme d'entonnoir rigide et fermé de toute part à l'exception de son extrémité inférieure (82) au niveau de laquelle est située la partie (3) mise sous tension mécanique permanente et/ou **en ce que** le dispositif de multiplication (8) consiste en deux ou plusieurs récipients interconnectés (2, 2'), chacun comportant une partie (3, 3') mise sous tension mécanique permanente et/ou **en ce que** le dispositif de multiplication (8) comporte un premier récipient (2) rempli de résine échangeuse d'ions (1) avec une partie (3) mise sous tension mécanique permanente dont le changement de position est détecté par un capteur (5) et un deuxième récipient (2') supportant l'ensemble du premier récipient (2) également rempli de résine échangeuse d'ions (1') avec une partie (3') mise sous tension mécanique permanente, le changement des positions, aussi bien celui de la première partie (3) que celui de la deuxième partie (3') dus aux variations des deux volumes des résines échangeuse d'ions (1, 1'), sont détectés par le capteur (5) et/ou **caractérisé par** un empilement de plusieurs dispositifs de multiplication (8).

14. Dispositif selon une ou plusieurs des revendications précédentes, **caractérisé en ce que** le liquide traverse le récipient (2) de bas en haut et/ou **en ce que** l'orientation du flux du liquide traversant le récipient (2) est perpendiculaire à la force mécanique permanente de la partie (3) et/ou **en ce que** les conduits d'arrivée et de départ (60, 61) du liquide sont situés sur un côté du châssis (6).

15. Dispositif selon une ou plusieurs des revendications précédentes, **caractérisé en ce que** la partie (3) mise sous tension mécanique permanente comporte une tige de translation (9) agissant sur un capteur (5) et/ou **en ce que** la tige de translation (9) est située au niveau de la partie (3) du côté opposé de la résine échangeuse d'ions (1) et/ou **en ce que** la tige de translation (9) est située de préférence au milieu voire au centre de la partie (3) mise sous tension mécanique permanente et/ou **en ce que** la position de la partie (3) est transformée en un signal analogue ou numérique.

16. Dispositif selon une ou plusieurs des revendications précédentes, **caractérisé en ce que** le capteur (5) est un capteur de pression ou un détecteur de mouvement et/ou **en ce que** le capteur (5) est un détecteur optique (50), un système de lecture magnétique ou un système similaire et/ou **en ce que** le détecteur optique est un système mesurant les temps d'aller-retour d'un signal optique et/ou **en ce que** le détecteur optique (50) est une barrière électromagnétique et, en particulier une barrière infrarouge (53) comportant une diode émettrice (51), en particulier telle une diode infrarouge, une photodiode réceptrice (52), voire une photodiode infrarouge et, le cas échéant située entre les deux, l'extrémité (90) de la tige de translation.

17. Dispositif selon une ou plusieurs des revendications précédentes, **caractérisé en ce que** le capteur (5) est situé à l'extérieur du châssis (6) ou du récipient (2) et est séparé de manière étanche par rapport aux derniers éléments et/ou **en ce que** le châssis (6) ou le récipient (2) est transparent au niveau du détecteur optique (50) et/ou **en ce que** le détecteur (5) est également utilisé pour la mesure d'autres paramètres physiques.

18. Dispositif selon une ou plusieurs des revendications précédentes, **caractérisé en ce que** le capteur (5) et en particulier le détecteur optique (50) sont utilisés également pour déterminer la salinité ou la dureté de l'eau ou pour analyser le liquide de régénération traversant le dispositif.

19. Dispositif selon une ou plusieurs des revendications précédentes, **caractérisé en ce que** la position du capteur (5) est ajustable à des fins de calibrage par rapport à la position de la partie (3) mise sous tension mécanique permanente ou par rapport à celle de la tige de translation (9) et/ou **en ce que** la position de la partie (3) mise sous tension mécanique permanente ou celle de la tige de translation (9) est ajustable à des fins de calibrage par rapport à la position du capteur (5) et/ou en ce que la position d'une autre partie du récipient peut être ajustée par rapport à la partie (3) mise sous tension mécanique permanente à des fins de calibrage.

20. Dispositif selon une ou plusieurs des revendications précédentes, **caractérisé par** une longueur variable de la tige de translation (9) permettant d'effectuer un ajustement et/ou **caractérisé par** un affichage mécanique rendant visible le déplacement de la tige de translation (9).

21. Dispositif selon une ou plusieurs des revendications précédentes, **caractérisé en ce que** le capteur (5) est situé à côté, en dessous ou au-dessus du récipient (2).

22. Des machines domestiques utilisant de l'eau, tels les lave-linge, lave-vaisselle ou des machines domestiques similaires, des systèmes de régénération d'eau, des systèmes de dessalement, des adoucisseurs d'eau ou des systèmes similaires utilisant au moins un dispositif selon une ou plusieurs des revendications précédentes.

23. Procédé pour la saisie continue ou quasi continue de l'état de charge d'une résine échangeuse d'ions située à l'intérieur d'un récipient d'adoucisseur d'eau, en particulier selon une ou plusieurs des revendications précédentes 1 à 22, à l'aide d'un capteur mesurant en mode continu ou quasi-continu la position d'une partie d'un récipient mise sous tension mécanique permanente et comparant les positions mesurées aux valeurs de référence d'une résine échangeuse d'ions chargée et vierge et déclenchant ou arrêtant respectivement la régénération de la résine échangeuse d'ions lors du dépassement des valeurs de charges maximales ou minimales.

24. Procédé selon la revendication 23, **caractérisé en ce que** la résine échangeuse d'ions est rincée après le procédé de régénération avec du sel de régénération et **en ce que** la salinité du liquide de régénération ou sa concentration en produits de régénération sont contrôlés par un capteur de rinçage approprié.

25. Procédé selon une ou deux des revendications précédentes 23 et 24, **caractérisé en ce que** le capteur sert également au cours du procédé de rinçage comme capteur de rinçage.
